# EUROPEAN PATENT APPLICATION

(11) **EP 2 489 425 A1**
(43) Date of publication of application: **22.08.2012**
(21) Application number: 10835508.2
(22) Date of filing: 15.10.2010
(51) Int. Cl.: B01D 61/06

(54) **HYBRID MODULAR SYSTEM OF STATIC CHAMBERS WITH VIRTUAL ROTATION FOR SAVING ENERGY IN REVERSE-OSMOSIS DESALINATION**

(30) Priority: 16.10.2009 ES 200902004; 07.12.2009 ES 200902297
(71) Applicant: Barreto Avero, Manuel, 38009 Santa Cruz de Tenerife (ES)
(72) Inventor: Barreto Avero, Manuel, 38009 Santa Cruz de Tenerife (ES)
(74) Representative: Roeb Diaz-Alvarez, Maria
(86) International application number: PCT/ES2010/000420
(87) International publication number: WO 2011/070185

(57) **Abstract**

Hybrid modular system of static chambers with virtual rotation for saving energy in reverse-osmosis desalination of the type that comprise a membrane-osmosis installation where the sea water is separated into desalinated water and waste brine at high pressure, which is forced through one or more pressurisable tubular chambers. The system comprises a series of unitary elements each of which has a conventional tubular chamber with two non-return valves at one end and on the other end a three-way piston or membrane pilot-operated valve is installed and actuated by the pressure of the waste brine coming directly from the membrane. The unitary elements are supervised and controlled by an electronic device that manipulates the valves to create a sequence that, without having to physically rotate the chambers, causes the water flows to behave in exactly the same way they would in a conventional rotary-chamber system.

## Description

### Technical field of the invention

The present invention discloses a system of static pressurised chambers with virtual rotation for saving energy in reverse-osmosis sea water desalination.

### Background of the invention

The most efficient technology currently used for saving energy in reverse-osmosis desalination comprises the use of chambers that are alternately pressurised, as explained below.

The process for sea water desalination, according to the principle of reverse osmosis, consists of forcing a stream of pre-treated sea water, driven by a high pressure pump, through a membrane-osmosis installation, where it is separated into pure water without pressure and a solution with a high brine content at high pressure. The energy of that concentrate which exits at high pressure will be that used for saving energy.

To achieve this energy saving, a cylinder or tubular chamber is used, equipped inside with a plunger with minimal friction. One side of said cylinder (for example, left side) has two valves, V2 for the outlet of sea water towards the membranes and V3 for the intake of sea water to the chamber. The other end of the cylinder (for example, right end) is connected to valve V1 for the intake of waste brine from the membrane and a valve V4 for the outlet of brine to the sea.

At the start of the cycle, the chamber is filled with sea water, having valve V3 open and displacing the plunger to the right side. When the chamber is filled with sea water valve V1 opens and waste brine starts to enter at high pressure, driving the feed water that exits through open valve V2 towards the membranes producing the desalinated product water due to the phenomenon of reverse osmosis.

When the plunger reaches the left end, V1 closes opening V4. In said circumstance, sea water at low pressure enters via open valve V3 which expulses the brine through V4 filling the chamber with sea water. A new cycle starts at this point.

The device disclosed needs to resolve a problem in order to function correctly.

This problem is due to the fact that the transfer of pressure to the sea water by the brine must be continuous. In the case described, whilst the plunger moves towards the right, it does not drive sea water, which is not acceptable for the membranes as they would remain without water. This problem is resolved by installing a second chamber (second cylinder) in parallel, the operation whereof must be out-of-phase with respect to the first so that the membranes are permanently receiving sea water at high temperature from the chambers. Even in this case there is a short period of time that corresponds with the change of water filling in the chambers, wherein the feeding of sea water through V3 stops, which causes all that water in movement to produce a very dangerous water hammer for the low-pressure installation of the desalination plant.

That set of chambers forming the system may be of two types: static or rotary.

The static systems handle large volumes of water in general two chambers which, by means of a common mechanism that connects them at all times, means that whilst one works providing water to the membranes, the other chamber is refilled with sea water whilst it discharges the brine that has remains as waste. In general, the larger one wants the system to be, the larger the chambers are and they are never divided in smaller chambers connected in series. These static systems have large valves and large actuation mechanisms. A pair of tubes has at one end four two-way non-return valves (eight-way in total) and at the other end four two-way pilot operated valves (another eight-way) which, in some cases, to simplify, a single five-way valve is used actuated by pneumatic, hydraulic or electric systems.

The rotary systems (whose precursor was Klaus Eimer, 1979) are extremely simple as they do not have valves, as their effect is achieved with the use of a drum perforated with longitudinal holes (in the order of 10 to 12) which act as small chambers, with two caps in their bases by way of ports, wherethrough the water enters and exits, which are connected and disconnected sequentially on rotating the drum. The main drawback of this system is that the caps of the cylinder bases have to be well tightened to make them properly watertight, so that the water that enters at high pressure does not escape, but if tightened too much, it may check the rotation of the rotary drum. Therefore, this system requires great precision in its manufacturing, with the material used *par excellence* being alumina, since it requires great hardness to withstand friction at more than 1200 rpm with water as lubricant.

Static chambers are for greater production volumes and rotary chambers, due to the simplicity of the system, are built for small capacities, since if they are used in large plants it is necessary to connect many of these small apparatuses in parallel.

The company Calder markets a system of static chambers called Dweer (Dual Work Exchanger Energy Recovery) consisting of two conventional chambers and with the five-way valve actuated by a hydraulic station.

The energy saving system marketed by Siemag is similar to the above with the exception that it is basically formed by three static cylindrical chambers, connected in parallel.

Patent number ES2153290 by the same applicant discloses a pair of static chambers which are alternatively pressurised with the novelty of being a continuous kinetic cycle, wherein the water does not stop in the chambers when they are pressurised, depressurised, expulse the brine or collect the sea water, thus avoiding the consumption of kinetic energy which would entail the stopping of the water mass that circulates through said chambers. This invention meant the solution of a technical problem existing until that time, which consisted of avoiding the loss of kinetic energy in the water mass of the chambers, generated by its stopping as it is an interrupted and non-continuous cycle.

Document US4887942 by Hauge discloses a system of rotary chambers consisting of a perforated cylinder by way of a revolving drum, the operation whereof is based on the rotation of said chamber closing and opening ports that allow the emptying and filling of the chambers to renew the sea water expulsing the brine.

Having seen the closest state of the art, it is verified that there are a series of technical problems for static systems:
- They require large controlled valves, generally cylinder and slide of five-way or more.
- They require the use of motors or small hydraulic plants to handle said valves.
- Due to the large size of these systems, both the valves and the connecting elements between the valves and the chambers have a high weight and large dimensions which involves high manufacturing and maintenance costs.
- Due to their design, their manufacturing is not profitable for small volumes, less than 5000 m3/day.
- In the change from one chamber to the other, it requires that both chambers, for a time, are kept pressurised so that the high pressure of the membranes does not drop, which involves the entry of feed water into the chambers being blocked. This causes a water hammer which easily breaks the low-pressure installation. As a solution, either enormous expansion vessels are used or that water, which has previously been treated, is discharged into the sea.

The rotary chamber systems also have a series of problems, such as:
- Due to the high rotation rate of the rotor (1200 rpm) and as there is no time to pressurise/depressurise the 10 or 12 chambers forming the rotor, considerable explosions are caused emitting a noise exceeding all admissible ranges, above 90 db.
- It is not possible to manufacture for volumes over 2000 m3/day as the centrifugal force breaks the rotor, which means that for greater volumes it is necessary to install devices in parallel, which multiplies the noise.
- Another problem found is due to the high precision required in their manufacturing, which means that these devices cannot be repaired in the event of fault or breakage, as the spare parts do not exist, so that if one of the chambers breaks it is necessary to replace the complete unit.
- That precision also means that the water must enter the system perfectly filtered, which requires special filtration for this type of rotary systems, since a simple grain missed by the sand filters would break the devices.

Therefore, the present invention has the objective of providing a hybrid system of static chamber provided with virtual rotation, which resolves all aforementioned technical problems. Furthermore, it combines the advantages of both the large static chambers and the smaller dynamic chambers, it being possible to manufacture them for the entire range of desired volumes.

### Description of the invention

The invention comprises a set of unitary elements consisting of static pressurisable chambers connected in parallel. Each one of the unitary elements has two non-return valves at one end. At the other end a three-way piston or membrane pilot-operated valve is installed and actuated by the high-pressure water, preferably by the waste brine of the membrane. This actuation system is not used in the state of the art due to the highly corrosive nature of the brine, however, nowadays valves can be manufactured with materials, whether metals or polymers, that resist this high aggressiveness.

The set of valves of all the unitary elements is supervised and controlled by an electronic device which achieves, without having to physically rotate the chambers, that the water flows behave in exactly the same way they would in a rotary drum.

The rotary drums fill and empty the chambers sequentially due to the effect of the drum rotation. In our invention this sequential filing and emptying does not generate the rotation of any mechanical element, but the sequence of programmed orders in the electronic device and which are sent to the pilot-operated valves.

An improvement of the modular hybrid system, also object of the present invention, relates to the design of the static pressurisable chambers, also called isobaric or pressure chambers, which are tubular chambers formed by a steel tube internally coated with plastic. A loose or floating piston is housed in each chamber or cylinder, with a very special design without friction, which acts as a separating partition between the brine and the water to desalinate, such as that disclosed in patent P9701877 of the same applicant, where it also discloses a positioning system of said piston with magnets that are detected from outside the tube by sensors of network type or Hall effect. We must mention that the austenitic steels used in desalination and also those of ferro-austenitic and superduplex structure are permeable to magnetic fields and may capture the signal. This piston operates perfectly stabilised with the water density which is balanced without weight in the fluid.

In an improved embodiment, smooth rings are placed on that piston so that only they rub, with barely any pressure, since the differential pressure will be created by the segment itself, depending on how much it has been tightened. In this way, the piston will be moved with absolute precision and smoothness, with no stress, without loss of energy and without the brine mixing with the sea water. Furthermore, this piston, as it moves without pressure differential, but instead is dragged by the stream of water, has an especially designed valve, in the centre, which operates two-way, so that if it reaches the end of its stroke in one or the other direction and the pressure acts above a preset value, the valve opens, as a safety measure, allowing the water to pass through.

In terms of the valves, in the isobaric chambers the water circulates in both directions with the intermediate piston previously described. The passive non-return valves which open and close with the flow of water which overcomes a spring, correspond to those of water which comes from the sea and there are two, both being in the same side of the isobaric tube or chamber. The other two valves, those which correspond to the passage of brine, are controlled and automatic and are on the same side of the chamber. One of the two valves, that which is on the low-pressure side of the chambers opens to expulse the brine out of the chambers; the other valve, which is on the high-pressure side, allows the high-pressure brine to pass through which comes from the membranes to the chambers and which drives the sea water using the separating piston, which opens the high valve of the opposite side which goes to the membranes.

As regards the valves that open and close the passage of fluid to the chambers, another of the advances of this invention is that they will be directly placed on the cap of the chambers that are pressurised, disposed in the same form and manner that they are in internal combustion engines, like those of motor vehicles. By geometry, for the good passage of the fluid, there may be two or four valves in the head.

The valve seats are machined in the chamber cap or added to this cylinder head.

It is important to highlight that the type of valves to be used are conical or flat plate seat and with guide rod.

In the state of the art, all isobaric chambers have the valves installed on the outside of the chambers and connected to them by means of tubes that remain outside of the chambers. This refers to the non-return valves, as those which are controlled, are always of the sliding type with ports, rotary or ball, but never of the on-off type as explained in internal combustion engines, as is the case of the invention claimed.

As the invention claimed includes the valves in the caps of the chambers or cylinder head, only the tubes remain on the outside achieving two essential objectives: the first is the saving in materials and labour of tubes and connection flange systems, which translates into an important decrease in costs and the second, much more important, is that as the chambers change pressure as they are filling with sea water at atmospheric pressure or they are displacing it to the membranes pushed by the high pressure of the waste brine, the tubes exiting are also subject to these fluctuations together with their valves, connection flanges, seals and the corresponding nuts and bolts, which considerably increases the risk of faults. In the case of the invention presented, there is nothing of this which considerably increases the useful life and without faults or leaking from the equipment.

This constant pressure in the four tubes connecting to the chambers, makes it possible to use commercial joints (vitaulic joint type) consisting of a clamp made in two parts which are joined with two screws that compress the two halves against an elastomer ring and which have the advantages of a fast installation, integrity of the design, reliability of the operation but which cannot operate with sudden pressure variations. Until now, the constant pressure in the four connection tubes has been exclusive to rotary chambers, but unthinkable in static chambers.

The valves, being of plate type with rod, have a special characteristic in their design, which consists of the fact that, apart from the typical function of hermetically closing by pressure seat, it leaves a small chamber of trapped water between the cap and the body of the valve which buffers the closing strike, avoiding noises and extending its life as it avoids stresses to the materials struck.

Furthermore, the cap has a series of small orifices wherethrough the trapped water will escape with a slow pace so that the closure is slower and, in consequence, less sudden. This same series of holes has a second mission which consists of, when the chamber is at high pressure or, in contrast, at low pressure, the valve that should open will do so first with the holes which will act as pressure diffusers, so that the pressures are gradually and not suddenly balanced, in this way avoiding the loud noise produced in the chambers that are pressurised caused by that surge of static pressure.

To summarise, the points referring to the valves are as follows:
1. A rational valve design included in the cap, not remaining on the outside with independent support flanges.
2. Plate valves and rod, both for the two non-return valves with sea water spring and those of brine that work automatically, pilot-operated.
3. Simple forms without special materials, as there are no parts subject to friction with high speed and pressure.

As regards the low-pressure feed water, in all the existing designs, it is necessary to stop it when a chamber is filled. That stop means that the excess liquid, which is checked when it arrives with a certain speed, gives rise to a water hammer, which will be more considerable the smaller the number of chambers to distribute and the greater the stopping speed, irrespective of the tube length behind it. A great advantage offered by the system of the invention is that the valves are controlled by an electronic system with great speed and response precision, so that a chamber which is empty can be opened and made to coincide with the closure of one which has filled, without having to stop the feed water.

Another of the key advantages of virtual rotation, i.e. electronic and not mechanical operation, is that there is no mechanical circle of the chambers, wherein 180° is used for the high-pressure chambers and another 180° for the low-pressure chambers. In this case there is no separation by a physical partition, i.e. half of the chambers do not have to be filling and the other half emptying, but there may be a phase difference and unequal numbers of chambers filling or emptying and which does not even have to be a whole number of chambers, since it could be a fraction. As there is no physical rotation, there is no constant angular velocity since there is no solid body that rotates, therefore we do not have to depend on there being the same angular velocity for all tubes corresponding to the virtual rotation, as we can electronically advance or delay, in degrees, minutes or seconds of degrees, the inlets and outlets of each chamber as best suits so that the feed pressure to the membranes is as stable as possible.

According to this, we can have one or more chambers in waiting mode, both for filling and emptying their content, even leaving them inoperable so that when there is, for any unforeseen reason, a pressure surge in the feed (detected by a pressure transducer in the water feed line of the recuperator), the electronic system sends an opening signal to the valves so that they open or close according to requirements and may divert the excess flow to one of these chambers waiting to be filled.

This system, unlike the known state of the art, has the following advantages:
- It is completely silent due to the fact that the opening time of the chamber valve can be electronically controlled, which avoids the explosion produced by the sudden entry of high pressure in the chamber, unlike the rotary systems which have a constant angular velocity and, therefore, not adjustable.
- The total number of chambers always remains active: in conventional rotary systems on the market this does not happen. In them, half of the chambers operate at atmospheric pressure (low pressure of sea water feed) and the other half at reverse-osmosis pressure (high pressure of the membranes). These two zones of high and low pressure are divided by a separating partition or neutral zone which blocks the operation of at least two of the diametrically opposite chambers, in the transition time of high to low pressure and from low to high pressure. In the present invention there is no physical partition that blocks any chamber so that during the transition no chamber is blocked meaning that for the same capacity at least two chambers can be dispensed with.
- Flexibility to decide the number of chambers that are providing the sea water to the membranes at high pressure or which are receiving the sea water at low pressure, without it being essential that half of them operate at high pressure and the other half at low pressure. This is achieved by dephasing the transition zone since, as there is no physical partition, it is the electronic device which advances or delays the entry of water in the chambers. In this way it is possible to have more tubes feeding the membranes at the expense of slightly raising the feed water to the low-pressure chambers.
- When the system detects a fault or breakage in one of the chambers, the electronic device immediately applies a phase difference so that the number of chambers that are supplying the water to the membranes is kept constant and the remaining chamber changes to the low-pressure zone, making up for said lack with a slight increase in feed water pressure.
- It enables the repair of one of the chambers without the need to shut down the system, since manual block valves are installed to be able to dismantle the chamber without this affecting the correct operation of the system, without pressure losses being caused.
- The fact that the three-way pilot-operated valve is actuated by the brine avoids motors or hydraulic or pneumatic systems being used to manoeuvre the valve. The reason for using the brine as actuation is due to it being the point with the necessary energy closest to the three-way valve.
- With only two valve sizes, by varying the length and the number of chambers we can obtain systems for practically the entire range of desired volumes.
- It is a modular system whose unitary element is the pressurisable chamber with the associated valves, which means the system size can be established on demand.
- The fact that the system is modular simplifies manufacturing (as it allows the serial manufacturing of simple elements), installation (since it does not require specialised personnel) and maintenance (which is reduced to replacement of a valve in the event of fault).
- As it is a modular system with virtual rotation, the organisation of the chambers does not have to have a circular configuration, it being possible to configure it in the form of a rectangular or linear matrix or configuring them so that they adapt to the available space.

Therefore, this invention involves a modular hybrid system, a consequence of the fusion of the traditional pressurisable static systems with the rotary system of multiple chambers that rotate at high speed.

### Description of the drawings

To complete the description being made and in order to aid towards a better understanding of the invention, a set of drawings is attached wherein the following has been represented with an illustrative and non-limiting character:
- Figure 1:: General diagram of a reverse-osmosis desalination plant with energy saving system
- Figure 2:: Unitary element of the modular hybrid system
- Figure 3:: Operating sequence of a rotary system of the state of the art
- Figure 4:: Operating sequence of the system of the invention without phase difference
- Figure 5:: Operating sequence of the system of the invention with phase difference
- Figure 6:: Comparison between the rotary system of the state of the art and that of the invention
- Figure 7:: Views of the modular hybrid system
- Figure 8:: Different arrangements of the unitary elements
- Figure 9:: General view of two isobaric chambers
- Figure 10:: Perspective view of the intermediate piston
- Figure 11:: Section of the piston
- Figure 12:: Detail of operation of the intermediate piston
- Figure 13:: Detail of operation of the valves
- Figure 14:: General view of the chambers at the time of their operation

### Preferred embodiment of the invention

To achieve a better understanding of the invention, the modular hybrid system with virtual rotation for energy saving in reverse-osmosis desalination is described below.

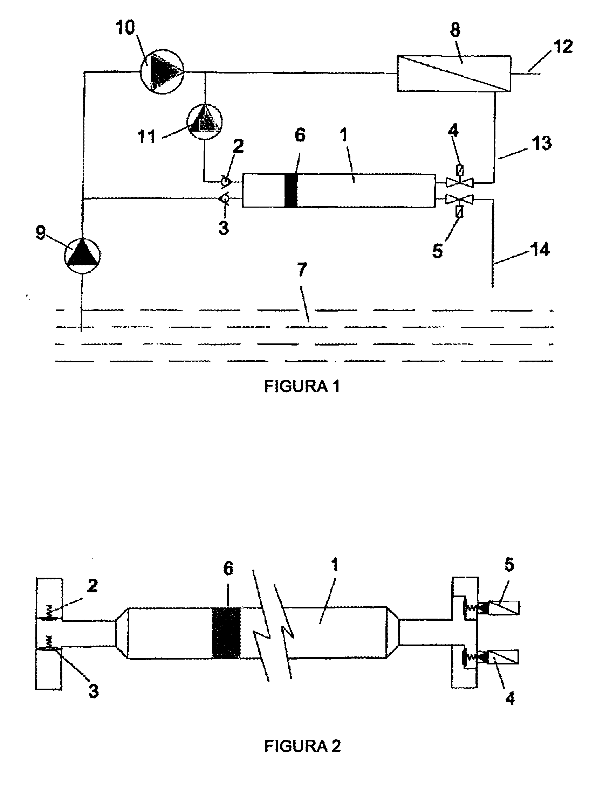

Figure 1 shows a general diagram valid for any reverse-osmosis desalination system with energy saving system consisting of pressurisable chambers.

The process for the desalinisation of sea water, according to the principle of reverse osmosis, consists of forcing, driven by a raw water supply pump (9), a stream of sea water (7) towards a high-pressure pump (10) to reach a membrane-osmosis installation (8), where it is separated into pure water without pressure (12) and a solution with a high brine content at high pressure (13).

To achieve the energy saving, a cylinder or tubular chamber (1) is used, provided in its interior with a plunger (6) with minimal friction.

Said cylinder (1) has connected at one of its ends (for example, left side) a non-return valve (3) which collects the water from the raw water supply pump (9) and a non-return valve (2) which sends the water from the interior of the chamber (1) to the booster pump (11), connecting with the outlet of the high-pressure pump (10) and both flows heading together to the membrane (8).

The waste brine (13) which exits the membrane (8) at high pressure enters through a pilot-operated valve (4) into the chamber (1). The waste brine (13) which fills the right side of the chamber (1) displaces the plunger (6) driving the sea water inside the chamber (1) towards the booster pump (11). Once the plunger (6) has reached the end of the stroke the pilot-operated valve (4) closes, the pilot-operated valve (5) then opening. The raw water supply pump (9) presses the non-return valve (3) opening it and allowing the chamber (1) to be filled with sea water and displacing the plunger (6) towards the right end of the chamber (1). The brine accumulated in the right side of the chamber (1) is expulsed through the pilot-operated valve (5) towards the sea (14).

Figure 2 shows the modular unitary element of the hybrid system with virtual rotation disclosed by the invention. It is formed by a pressurisable tubular chamber (1) whereto is connected, by one of the ends, a high-pressure water discharge valve (2) to the membrane (8) and a valve (3) for the entry of sea water (7) at low pressure. Both valves (2, 3) are of non-return type. A three-way valve (4, 5) is connected at the other end of the chamber (1). This three-way valve is of pilot-operated type with piston or membrane, and is actuated by the pressure of the sea water, preferably by the waste brine of the membrane that reaches it at high pressure. Although this regulation does not exist in the state of the art, due to the highly corrosive nature of the brine, nowadays valves can be manufactured with materials, whether metals or polymers, that resist this high aggressiveness.

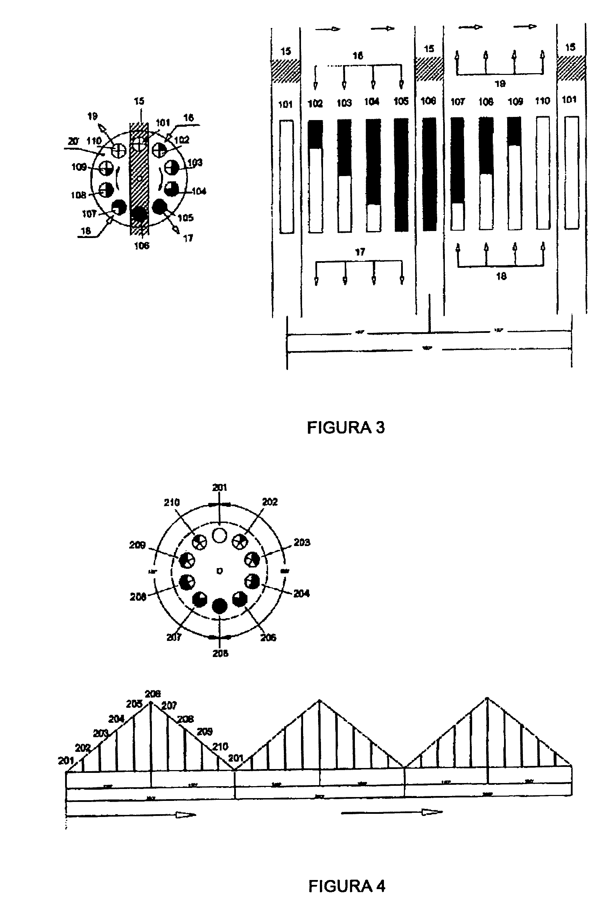

Figure 3 represents the operation of the rotary system existing in the state of the art. This system comprises a rotor (20) with a series of chambers (101 - 110) in the form of perforated channels wherethrough the sea water and brine circulates. The operation consists of the following: the waste brine which exits the membrane at high pressure (16) enters the chambers (102 - 105) located in the high-pressure side. The chambers (101, 106) in the neutral zone (15) are blocked by a flat surface which acts as port cap and which separates the high-pressure zone from the low-pressure zone. Water enters the low-pressure chambers (107 - 110) from the sea (18) which expulses the brine from the chambers (19). The rotor (20) rotates at high speed which means that there is not sufficient time for the change of high pressure to low pressure to take place gradually, causing a tremendous water hammer with the disastrous consequence that this entails for the wear of the system and the loud noise it produces. Furthermore, as can be seen in the same figure, there are two chambers (101, 107) which cannot be used at all times as they are in the neutral transition zone (15), where the chambers vary their pressure.

Figure 4 represents the operation of the virtual rotor of the invention. In comparison with that of the state of the art of figure 3, we can see that the neutral zone disappears, which means that all the chambers (201 - 210) are operational at all times. Furthermore, it is not a real rotation of the chambers as in the previous case, but a filling and emptying thereof with waste brine and sea water, sequentially, all controlled by an electronic device.

The drawing shows the operation of the chambers throughout three hypothetical rotations of the real rotor. In this case, five chambers have been represented which operate at high pressure (202 - 206), filling up with brine and sending the sea water at high pressure to the membrane and a further five (207 - 210 and 201) which are in the low-pressure zone, being emptied of brine and filling up with sea water.

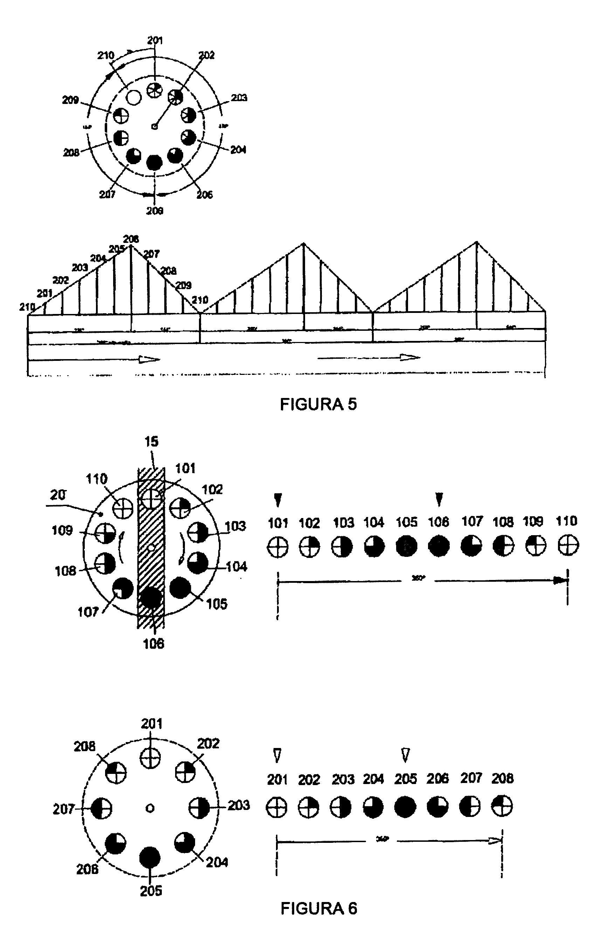

Figure 5 represents the operation of the virtual rotor hybrid system, wherein the electronic device introduces a phase difference in the transition zone, since there is no physical partition which produces the neutral zone (15), it is the electronic device which advances or delays the entry of the water in the chambers (201 - 210). In this way, it is possible to have a different number of tubes in the high-pressure zone (201 - 206) than in the low-pressure zone (207 - 210), which is of great interest in many cases for optimising system performance.

Figure 6 shows a comparison between the rotary system of the state of the art and the virtual rotor hybrid system of the invention, verifying that the same results are obtained using two chambers fewer (201 - 208) in the system of the invention than in that of the state of the art (101 - 110), as there is no neutral zone (15) in the first.

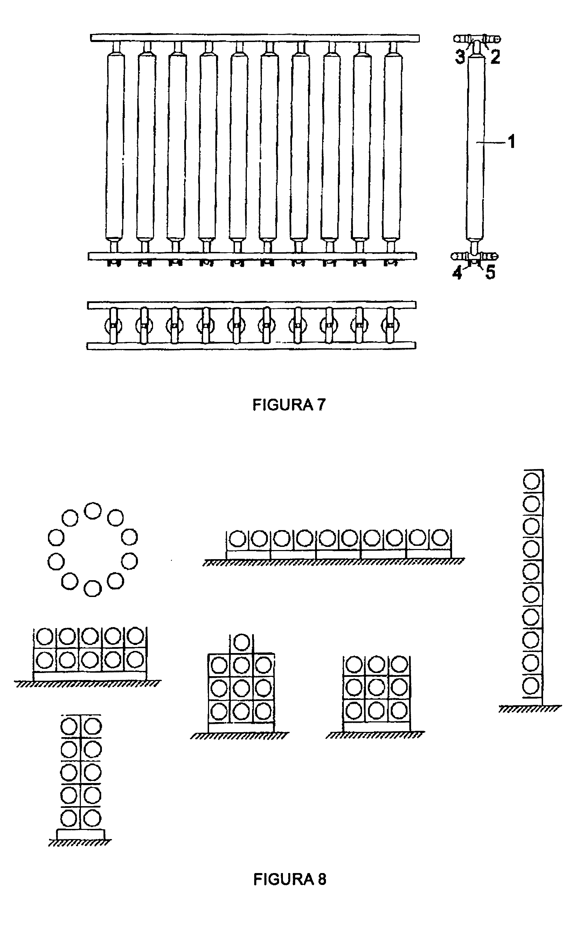

Figure 7 represents the modular hybrid system formed by a series of ten unitary elements connected in parallel. It shows the chambers (1) as well as the pilot-operated valves (4, 5) of each one of the elements and how, without being in circular configuration, they behave in the same way as the rotary chambers, as explained in figures 4, 5 and 6.

The fact that it is a modular system based on unitary elements, together with there being no real rotation of the chambers (1) but instead virtual rotation, means that the organisation of the chambers (1) does not have to be circular, it being possible to configure it in the form of a rectangular or linear matrix or configuring them so that they adapt to the available space, as represented in figure 8.

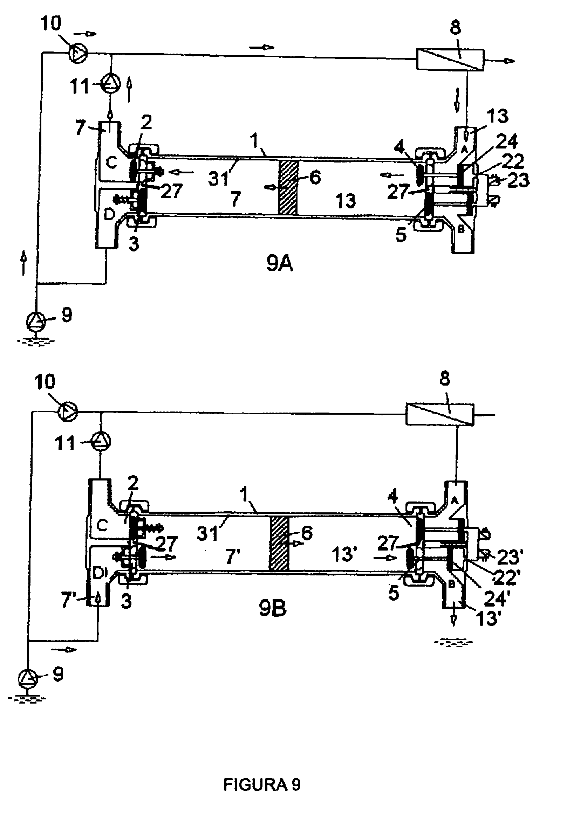

Figure 9 shows two cylindrical steel isobaric chambers (1) coated internally with a polymer (31). Two of the tubes will be at high pressure (A and C), without fluctuations; that of sea water (7) which goes to the membranes and that of brine (13) which arrives from the waste, and the other two tubes (B and D) of low pressure, are those of sea water or feed (7') and the waste brine (13') which is returned to the sea.

Figure 9A represents the chamber (1) operating at high pressure. The membranes (8) where the reverse-osmosis desalination is performed are fed with sea water sent by the high-pressure pump (10) and the booster pump (11). Desalinated water and waste brine (13) is obtained from the desalination. This brine is at high pressure and, to make use of its energy, the brine (13) is used to pump sea water (7) towards the booster pump (11) and from here to the membranes (8).

Figure 9B represents the chamber (1) operating at low pressure. When the chamber has filled with high-pressure brine (13) the raw water supply pump (9) fills the chamber (1) with sea water (7') to expulse the brine, now at low pressure (13'). In this case, the membranes (8) are fed with sea water from the high-pressure pump (10).

Of course the membrane (8) cannot stop receiving water, which means that at the time of change from high to low pressure the membrane (8) would be receiving from the other multiple chambers that would be assembled in parallel and following the sequence of the virtual rotation.

A piston or plunger (6), loose or floating, is housed in each chamber or cylinder (1), which separates the brine (13 - 13') and the water to desalinate (7 - 7').

The valves (4, 5) regulate the passage of the brine and both are pilot-operated and are in the same side of the chamber, one (5) to expulse the low-pressure brine (13') and another (4) to open the high-pressure brine (13) which comes from the membranes (8). Solenoid or piezoelectric valves (23,23') and which are activated by the signal of an automaton, let the high-pressure brine or water pass through which enters the (22, 22') of pistons (24, 24') which, when it receives said pressure push the valves (4, 5), opening them.

The passive non-return valves (2, 3) which open and close with the flow of water that overcomes a spring, correspond to those of water which come from the sea (13', 7') and there are two, one for the low pressure (3) and another for the high pressure (2), both being on the same side of the tube or isobaric chamber (1).

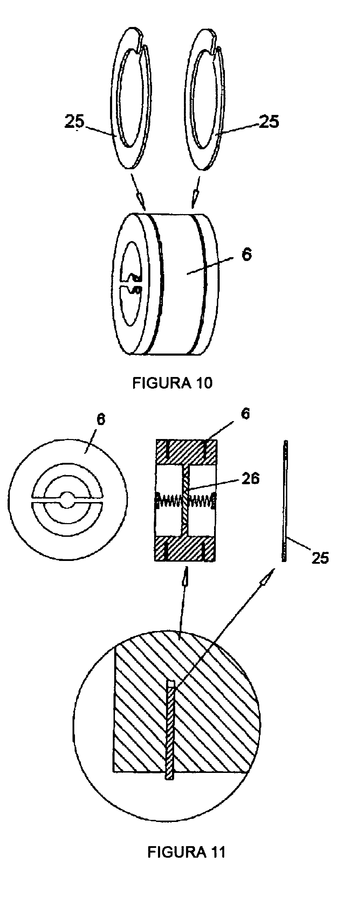

Figure 10 and figure 11 show the detail of a section and a perspective view thereof with the novelty of having introduced a pair of antifriction polymer rings (25) and a valve (26), so that the piston moves with absolute precision and smoothness without practically any measurable friction without stress or loss of energy or mixing of fluids.

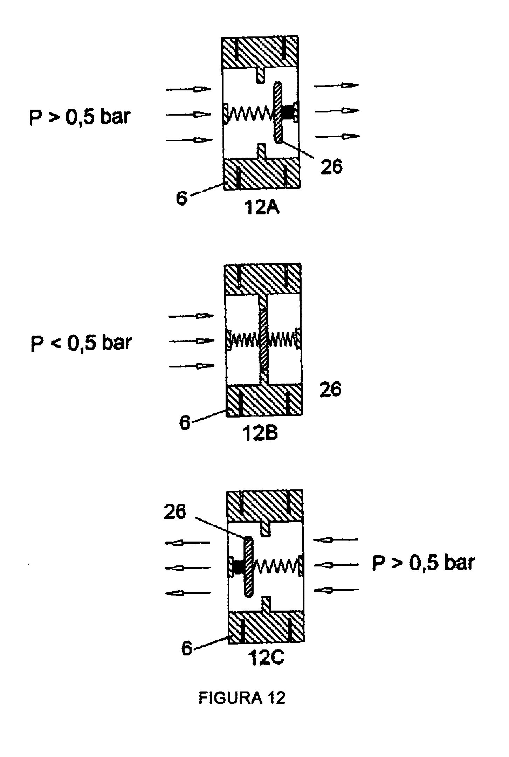

Figure 12 shows the operation of the piston with valve (26) in the case of being subjected to a pressure greater or less than 0.5 bar (pressure chosen in this embodiment) in one face or another. This piston (6) works perfectly stabilised with the density of water which is balanced without weight in the fluid. This embodiment places smooth rings (25) on that piston (6) so that it rubs with it almost without pressure because the differential pressure will be created by this segment, depending on how much it is tightened. In this way, the piston (6) will move with absolute precision and smoothness, without any stress or loss of energy or mixing of brine (13) with the sea water (7). Furthermore, this piston (6), as it moves without pressure differential, but instead is dragged by the stream of water, has an especially designed valve (26), in the centre, which operates two-way, so that if it reaches the end of its stroke in one or the other direction (figures 12A and 12C) and the pressure acts above a preset value (0.5 bar), the valve (26) opens, as a safety measure, allowing the water to pass through.

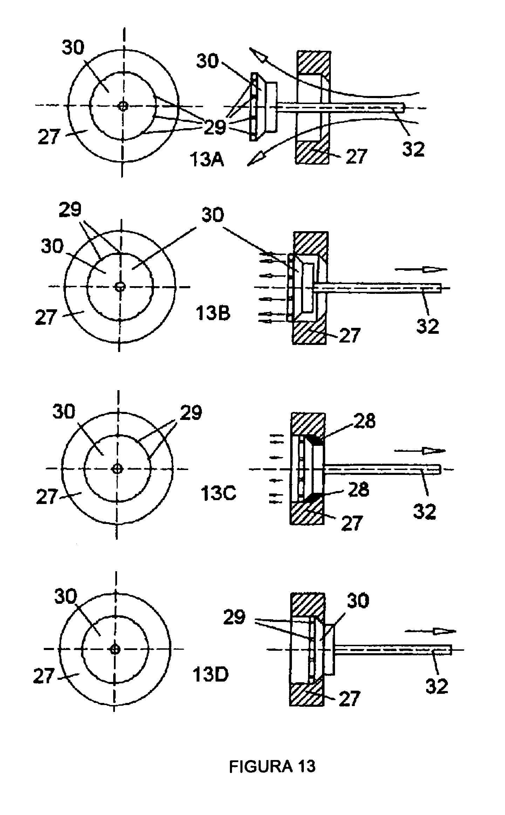

Figure 13 details the operation of the valves (2 - 5) which open and close the passage of the fluid to the chambers (1); one of the advances entailed by this invention is that the seats of the valves are machined in the cap (27) of the chamber (1).

The type of valves to use (2 - 5) are conical or flat seat plate and with guide rod (32), both for those of the non-return side or sea water, actuated by the pressure of the water (3, 2) and through the opposite side of the chamber (1) those of the brine (4, 5), which have the same form but are automatic, actuated applying a force to them through the rod (32).

The valves, being of plate type with rod, have a special characteristic in their design, which consists of the fact that, apart from the typical function of hermetically closing by pressure seat, it leaves a small chamber of trapped water (28) between the cap (27) and the body of the valve (2 - 5) which buffers the closing strike, avoiding noises and extending its life as it avoids stresses to the materials struck.

Studying the operation of one of the valves (2 - 5), according to figure 13A it is observed that in first place the valve is open and the fluid passes through it without any problems. In figure 13B, when it begins to close, the first contact is that of the disc with perforations (29) which is introduced in the cylindrical housing of the cap or cylinder head (27), allowing a sufficiently considerable amount of liquid to escape so that it does not suddenly close. In figure 13C the cylindrical base (30) of the valve is introduced in the transfer port of the water and remains practically closed, only one operation remains, figure 13D, corresponding to the complete closure by contact between the two conical surfaces of the body of the valve and cap (27). As is observed in figure 13C, a small section remains in the form of a rhombus (28) full of water which makes it possible that the seats do not strike until, due to the calculated clearance, the little trapped water is vacated with relative deceleration. Rather more important is the opposite operation or opening, where there is pressure and the valve opens, as it starts by removing the closure cones and when the cylindrical base (30) exits the cap (27), this base (30) remains in the cylindrical zone, allowing the water to escape, in the form of diffuser or sprinkler through the holes (29) of the periphery of the plate until the pressures are balanced and no hydrostatic pressure surge occurs. There is the possibility, with the valve opening control, of slowing down the opening until the pressures on one and the other side of the valve are balanced, so that it fully opens and allows the water to pass through.

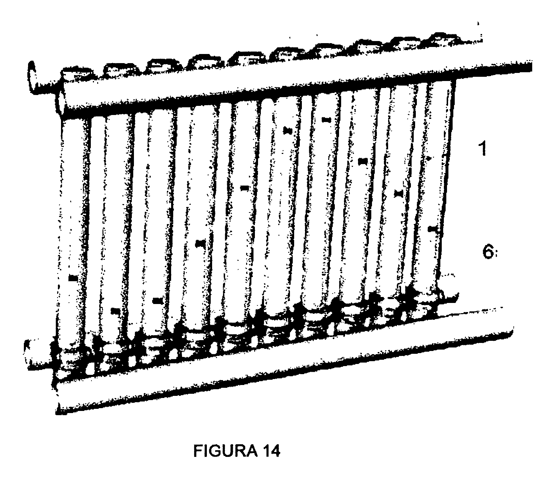

Figure 14 illustrates the fact that, as there is no physical rotation of the chambers (1), there is no constant angular velocity since there is no solid body that rotates, therefore we do not have to depend on there being the same angular velocity for all tubes corresponding to the virtual rotation (1), as we can electronically advance or delay, in degrees, minutes or seconds of degrees, the inlets and outlets of each chamber (1) as best suits so that the feed pressure to the membranes (8) is as stable as possible.

Therefore, the system disclosed by the invention is an important advance due to simplification and cost reduction of this energy saving devices for reverse-osmosis desalination plants of any production capacity, improving the performance of the currently known chambers. All of this is due to being able to give a system of static chambers the advantages of rotary systems, with all the added positive consequences that arise as a result of this modular hybrid system.

## Claims

1. Modular hybrid system of static chambers with virtual rotation for saving energy in reverse-osmosis desalination of the type that comprise a membrane-osmosis installation (8) where the sea water (7) is separated into desalinated water (12) and high-pressure waste brine (13), forcing it through one or more pressurisable tubular chambers (1) **characterised in that** the system comprises a series of unitary elements each one comprising a conventional pressurisable tubular chamber (1) with two non-return valves at one of the ends (2, 3) and at the other end a three-way piston or membrane pilot-operated valve (4, 5) is installed, which is actuated by the pressure of the waste brine (13) coming directly from the membrane (8); where the unitary elements are supervised and controlled by an electronic device which achieves by operating the valves a sequence which, without having to physically rotate the chambers, makes the water flows behave in exactly the same way they would in a rotary drum.

2. Modular hybrid system of static chambers with virtual rotation for saving energy in reverse-osmosis desalination according to claim 1, **characterised in that** the three-way valve (4, 5) is manufactured with materials, whether metals or polymers, that resist the highly corrosive nature of the brine.

3. Modular hybrid system of static chambers with virtual rotation for saving energy in reverse-osmosis desalination according to claim 1, **characterised in that** the operation of the virtual rotor makes the neutral zone (15) disappear, i.e. there is no physical partition of the high-pressure chambers with the low-pressure chambers which blocks at least two diametrically opposite chambers (101, 106), so that all chambers (201 - 210) are operational at all times.

4. Modular hybrid system of static chambers with virtual rotation for saving energy in reverse-osmosis desalination according to claim 3, **characterised in that** a phase difference is introduced in the pressure transition zone, which advances or delays the entry of the water in the chambers (201 - 210), so that it is possible to select the number of unitary elements operating in the high-pressure zone and the number of unitary elements operating in the low-pressure zone.

5. Modular hybrid system of static chambers with virtual rotation for saving energy in reverse-osmosis desalination according to claim 4, **characterised in that** the system is capable of detecting faults or breakages in one of the chambers, whereby the electronic device immediately applies a phase difference so that the number of chambers that are supplying the water to the membranes is kept constant and the remaining chamber changes to the low-pressure zone, not significantly affecting plant operation.

6. Modular hybrid system of static chambers with virtual rotation for saving energy in reverse-osmosis desalination according to claim 5, **characterised in that** the system enables the repair of one of the chambers without the need to shut down the system, since manual block valves are installed at both ends of the chamber (1) to be able to dismantle it without this affecting the correct operation of the system, without pressure losses being caused.

7. Modular hybrid system of static chambers with virtual rotation for saving energy in reverse-osmosis desalination according to claim 1, **characterised in that** as it is a modular system based on unitary elements without physical rotation, the distribution of said elements can adapt to the available space, producing different configurations, which may be in the form of a matrix, whether rectangular, linear, polar...

8. Modular hybrid system of static chambers with virtual rotation for saving energy in reverse-osmosis desalination according to claim 1, **characterised in that** the valves (4, 5) that regulate the passage of the brine are pilot-operated and are in the same side of the chamber (1) and solenoid or piezoelectric valves (23, 23') which are activated by the signal of an automaton, let the high-pressure brine or water pass through which enters the rear space (22, 22') of pistons (24, 24') which, when it receives said pressure, push the valves (4, 5), opening them.

9. Modular hybrid system of static chambers with virtual rotation for saving energy in reverse-osmosis desalination according to claim 8, **characterised in that characterised in that** the seats of the valves are machined in the cap (27) of the chamber, the type of valves to use being a plate valve with conical or flat seat and with guide rod (32) and there are 2 or 4 valves on each cap (27).

10. Modular hybrid system of static chambers with virtual rotation for saving energy in reverse-osmosis desalination according to claim 9, **characterised in that** the valves (2 - 5) have a peculiarity in their design as they leave a small chamber of trapped water (28) between the cap (27) and the body of the valve which buffers the closing bump.

11. Modular hybrid system of static chambers with virtual rotation for saving energy in reverse-osmosis desalination according to claim 10, **characterised in that** the cap (27) of the valves has a series of small orifices (29) wherethrough the trapped water will escape with a slow pace so that the closure is not as sudden and that during the opening they will act as diffusers so that the pressures are gradually balanced.

12. Modular hybrid system of static chambers with virtual rotation for saving energy in reverse-osmosis desalination according to claim 8, **characterised in that** a loose or floating separator piston (6) is housed in each chamber or cylinder (1), which acts as a separating partition between the brine (13, 13') and the water to desalinate (7, 7') and at least one ring (25) of antifriction polymer is introduced **in that** piston (6) and a valve (26) which opens above preset safety pressure value.

13. Modular hybrid system of static chambers with virtual rotation for saving energy in reverse-osmosis desalination according to claim 8, **characterised in that** as there is no physical rotation of the chamber (1) it is possible to electronically advance or delay, in degrees, minutes or seconds of degrees, the inlets and outlets of each chamber (1) to provide water to the membrane (8) and that the feed pressure is as stable as possible.
